# EUROPÄISCHE PATENTSCHRIFT

(11) **EP 0 511 259 B1**
(45) Veröffentlichungstag und Bekanntmachung des Hinweises auf die Patenterteilung: **14.06.1995**
(21) Anmeldenummer: 91902301.0
(22) Anmeldetag: 10.01.1991
(51) Int. Cl.: A47C 7/18, A47C 31/02, A47C 7/26, A47C 7/14

(54) **SITZ, INSBESONDERE FÜR FAHRZEUGE**
SEAT, IN PARTICULAR FOR VEHICLES
SIEGE, EN PARTICULIER POUR VEHICULES

(30) Priorität: 18.01.1990 AT 107/90; 15.02.1990 AT 357/90
(43) Veröffentlichungstag der Anmeldung: 04.11.1992
(60) Teilanmeldung: 94115978.2
(73) Patentinhaber: C.A. GREINER & SÖHNE GESELLSCHAFT M.B.H., A-4550 Kremsmünster (AT)
(72) Erfinder: WEINGARTNER, Rudolf, A-4501 Neuhofen an der Krems (AT); MÖSENEDER, Johann, A-4710 Grieskirchen (AT)
(74) Vertreter: Secklehner, Günter, Dr.
(86) Internationale Anmeldenummer: AT9100006
(87) Internationale Veröffentlichungsnummer: WO9110383

(56) Entgegenhaltungen:
- WO-A-86/03164
- WO-A-88/09731

## Beschreibung

Die Erfindung betrifft einen Sitz mit einem Polster aus Schaumkunststoff wie er im Oberbegriff des Patentanspruches 1 beschrieben ist.

Ein bekannter Sitz mit einem Polster aus Schaumkunststoff - gemäß WO-A188/09731 der gleichen Anmelderin - besteht aus einem Schaumkunststoff mit einem Stützkörper aus einem offenzelligen, elastischen Kunststoffschaum mit einem ersten Raumgewicht und einer Flammschutzschicht aus einem offenzelligen, mit Flammschutzmittel versehenen, elastischen Schaumkunststoff mit einem zweiten, zum ersten unterschiedlichen Raumgewicht. Zwischen der Flammschutzschicht und dem Stützkörper ist eine flammfeste, aus gitter- bzw. netzförmig verlegten, hochtemperaturbeständigen Fasern bzw. Fäden gebildete Zwischenschicht angeordnet, wobei die Schichten stellenweise verklebt sind. Der Kunststoffschaum und die Flammschutzschicht sind miteinander, insbesondere durch einen Schäumvorgang verbunden und mit einem schwer entflammbaren Bezugstoff umgeben. Diese Sitze erfüllen an sich die Sicherheitsbestimmungen und Prüfvorschriften, insbesondere für deren Anwendung in Flugzeugen, erschwert wird jedoch bei dieser Ausbildung die austauschbare Anbringung einer Deckschichte, die zum Zwecke der laufenden Reinigung in kurzen Abständen von den Sitzen demontiert und wieder montiert werden muß. Weiters weist der Sitzaufbau eine geringe Widerstandsfestigkeit des Sitzpolsters gegenüber mechanischen Beanspruchungen auf, da die Verbindung der einzelnen Teile der Flammschutzschicht hohen Belastungen ausgesetzt ist, die manchmal zu einer Zerstörung derselben führen.

Weiters sind bereits Sitze für öffentliche Verkehrsmittel bekannt - gemäß DE-GM 85 06 816 - die einen Sitzpolster aufweisen, der mit einem Sitzbezug abgedeckt ist, wobei der Sitzbezug und der Sitzpolster aus einem schwer entflammbaren und raucharmen Material besteht. Vielfach wird dabei so vorgegangen, daß zwischen dem schwer entflammbaren Sitzbezug und dem meist aus Kunststoffschaum bestehenden Sitzpolster eine Glasfasermatte angeordnet wird, die ein Durchbrennen des Sitzbezuges in Richtung des Sitzpolsters verhindern soll. Dabei hat sich jedoch gezeigt, daß in vielen Fällen die Flammeinwirkung vom Boden her entsteht und der Kunststoffschaum des Sitzpolsters dazu neigt, unter starker Rauchentwicklung zu verbrennen, wodurch die öffentlichen Verkehrsmittel im Brandfall in kürzester Zeit so verqualmt sind, daß eine Orientierung für Insassen kaum mehr möglich ist. Dementsprechend ist bei diesem bekannten Sitz vorgesehen, daß unterhalb des Sitzpolsters in dem Traggestell des Sitzes eine feuerhemmende Platte angeordnet wird. Dies bedingt die Verwendung eines speziellen Profils zur Halterung des Sitzpolsters sowie einen zusätzlichen Aufwand durch die Anordnung der feuerhemmenden Platte. Auch bei dieser Ausführungsform konnte die Sitzbelüftung nicht befriedigen.

Sitze mit Polster aus Schaumkunststoff sind im modernen Fahrzeugbau sehr weit verbreitet. Vor allem werden sie in Schienenund Straßenfahrzeugen aber in überwiegendem Maß auch in Flugzeugen eingesetzt. Während bereits die für Schienenfahrzeuge geltenden Vorschriften hinsichtlich der selbstverlöschenden Ausbildung der verwendeten Materialien bzw. der Rauchentwicklung sehr strenge Richtlinien vorschreiben, so werden diese von den in der Flugzeugindustrie geltenden Vorschriften aber noch übertroffen. So ist bei für den Einsatz in Flugzeugen zugelassenen Sitzen eine Prüfung vorgeschrieben, bei der die Polster in ihrer zum Einbau vorgesehenen Ausstattung einer Flamme aus einem Brenner direkt ausgesetzt werden. Diese Flamme wirkt über eine Zeitdauer von 2 Minuten direkt auf den Polster ein, wonach die Flamme verlöscht bzw. entfernt wird. Der Polster wird, falls bis dahin die Flammen nicht selbst erloschen sind, nach 5 Minuten gelöscht. Nach diesem Brandtest darf der Gewichtsverlust des Polsters nicht höher als 10 % sein. Um diese äußerst strengen Vorschriften zu erfüllen und gleichzeitig auch einen hohen Sitzkomfort in den Sitzen bei den lang andauernden Flugreisen und ein geringes Gewicht zu erzielen, wurden Sitzpolster aus verschiedenen, mit Flammschutzmitteln versehenen, offenzelligen, elastischen Weichschaumstoffen mit unterschiedlichen Raumgewichten zusammengeklebt.

Ein derartiger bekannter Fahrzeugsitz - gemäß EP-A1 190 064 besteht aus mehreren Lagen Nadelvlies, die von einem flammfesten Bezugstoff umhüllt sind. Zwischen dem Bezugstoff und den einzelnen Lagen aus Nadelvlies sind zur Verringerung von Schäden durch Vandalen Verstärkungsmatten aus Metall bzw. Glasfasern angeordnet. Durch das Verkleben der einzelnen Schichten und die vielfachen Zwischenlagen dieser Vandalenschutzschicht ist bei dem bekannten Fahrzeugsitz eine ausreichende Durchlüftung noch schwerer erzielbar.

Bei einem anderen bekannten Sitz für Flugzeuge ist, um die komplizierte räumliche Formgebung der Sitzpolster einfacher zu realisieren, der Stützkörper aus einem mit Flammschutzmitteln versetzten in einer Form einstückig geschäumten Teil gebildet, dessen Oberfläche mit einer Flammschutzschicht und danach mit einem flammfesten Bezugstoff überzogen wird. Mit den bekannten Sitzen konnten jedoch die neuen verschärften Sicherheitsbestimmungen und Prüfvorschriften für Flugzeugsitze nicht erfüllt werden.

Bei einem weiteren bekannten Fahrzeugsitz - gemäß DE-A 31 11 839 - ist eine Hartschaumschale bzw. ein Auflagerahmen mit Spannfedern vorgesehen, auf dem ein aus einer oder mehreren Schaumauflagen bestehender Sitzpolster angeordnet ist. Die Schaumschichten können aus einem schwer entflammbarem Material bestehen. Der Sitzpolster ist mit einer Brandschutzhülle ummantelt und auf der dem Benutzer zugewandten Seite mit einem schwer entflammbaren Gewebeüberzug versehen. Durch die Verwendung schwer entflammbarer Materialien und dem Brandschutzüberzug wird zwar eine geringfügigere Verbesserung des Abbrandverhaltens erzielt, der Volumensverlust bei der Einwirkung einer offenen Flamme auf die verschiedenen Schaumstoffschichten kann durch einen derartigen Aufbau jedoch nicht verringert werden.

Der Erfindung liegt die Aufgabe zugrunde, einen Sitz für Fahrzeuge, insbesondere Verkehrsmittel, wie Schienenfahrzeuge bzw. Flugzeuge, zu schaffen, der bei möglichst geringem Gewicht eine ausreichende Luftdurchlässigkeit und ein günstiges Sitzklima ermöglicht und bei einer direkter Flammenbelastung über möglichst lange Zeit dem Abbrand bei geringer Rauchentwicklung einen hohen Widerstand entgegensetzen.

Darüberhinaus bzw. auch davon unabhängig liegt der Erfindung die Aufgabe zugrunde, einen Sitz zu schaffen, der eine widerstandsfähige Befestigung einer Verbindungsvorrichtung für die Halterung des Bezugstoffes am Polster ermöglicht.

Diese Aufgabe der Erfindung auch durch die im Kennzeichenteil des Patentanspruches 1 enthaltenen Merkmale gelöst. Die Vorteile dieser neuen Lösung liegen darin, daß durch die Anordnung einer aus flammfesten Gewebe bzw. Gewirke oder Vlies bestehenden Deckschicht auf der Unterseite des Sitzpolsters das Gesamtgewicht des Sitzpolsters in vorteilhafter Weise bei nahezu unveränderten brand- bzw. rauchhemmenden Eigenschaften verringert werden kann. Gleichzeitig wird aber die Widerstandsfestigkeit des Sitzpolsters gegenüber mechanischen Beanspruchungen in nicht vorhersehbarer Weise erhöht, da diese meist räumlich sehr komplex geformte Unterseite mit einer nahtlosen Deckschicht verkleidet werden kann. Gleichzeitig ist die Belastbarkeit dieser mit dem Stützkörper verbundenen Deckschicht gegen Zugbelastungen, wie sie von Haltevorrichtungen für den Bezugstoff auf diese Deckschicht aufgebracht werden, widerstandsfähiger als die zuvor in diesem Bereich eingesetzte Flammschutzschicht, da die teilweise punktförmig eingeleiteten Belastungen über eine größere Fläche der Deckschicht verteilt auch die Verbindungsschicht, beispielsweise die Kleberschicht zwischen der Deckschicht und dem Stützkörper übertragen wird. Dadurch können in vorteilhafter Weise Ablösungen dieser Deckschicht vom Stützkörper beim Abziehen des Bezugstoffes zum Reinigen vermieden werden. Dabei können aber die sich als besonders vorteilhaft gezeigten Eigenschaften des Aufbaus des Sitzpolsters im Bereich der Sitzfläche unverändert beibehalten werden. Diese liegen vor allem darin, daß die Flammschutzschicht, die relativ offenporig ist, sehr gut gereinigt werden kann und ein behagliches Sitzklima schafft, da sie in der Lage ist, eine große Menge an Körperausdünstungen bzw. Feuchtigkeit aufzunehmen, um diese bei unbelastetem Sitz wiederum abzugeben. Dadurch entsteht ein hoher Sitzkomfort für den Benutzer. Dazu kommt, daß durch die Überdeckung des Kantenbereiches auch die stirnseitigen Stoßstellen zwischen den einzelnen Lagen der Flammschutzschicht und den dort angeordneten Kleberschichten überdeckt werden können, sodaß auch in diesen Bereichen ein Durchbrennen der Kleberschicht bei einer Flammenbelastung zuverlässig verhindert und ein Aufplatzen der Klebestellen bei starker Beanspruchung vermieden wird.

Eine weitere Ausbildung beschreibt Patentanspruch 2. Durch diese Ausbildung ist es ohne erhebliche Erhöhung des Gesamtgewichtes eines derartigen Sitzpolsters möglich, das Abbrandverhalten des Sitzpolsters auch bei einer Flammenbelastung von unterhalb des Sitzes zu verbessern.

Eine andere Ausführungsvariante ist im Patentanspruch 3 beschrieben, durch die die Herstellungskosten verringert und die Verbindung zwischen dem Stützkörper und der Deckschicht in vorteilhafter Weise noch erhöht werden kann.

Eine andere Weiterbildung nach Patentanspruch 4 ermöglicht eine partielle, gewichtssparende Verstärkung der Deckschicht zur Anpassung an die unterschiedlichen Belastungszonen, vor allem in jenen Bereichen, in welchen der Sitzpolster auf einem Traggestell aufliegt.

Vorteilhaft ist auch eine Ausführungsform nach Patentanspruch 5, da dadurch eine Dicke des Stützkörpers zwischen der der Deckschicht zugewandten Unterseite eines Federkerns und dieser Unterseite möglichst gering gehalten und trotzdem eine hohe Lebensdauer des Sitzpolsters erreicht werden kann.

Vorteilhaft ist auch eine Ausgestaltung nach Patentanspruch 6, da dadurch die Ausreißfestigkeit der Halterungsvorrichtung, insbesondere der Klettbänder in vorteilhafter Weise erhöht werden kann.

Weiters wird die Aufgabe der Erfindung auch durch die im Kennzeichenteil des Patentanspruches 7 enthaltenen, eigenständigen Merkmale gelöst. Die Vorteile dieser Lösung liegen darin, daß die Verbindungsvorrichtung, insbesondere das Klettband, auf den mit der Deckschicht versehenen Stützkörper mit hoher Positioniergenauigkeit und einfachen technischen Hilfsmitteln aufgebracht werden kann. Überraschend ist hierbei, daß bei entsprechender Beheizung der Positioniervorrichtung für das Klettband diese bzw. ein Trägerband für die Verbindungsvorrichtung in den ein thermisch verformbares Material aufweisenden Bereichen aufschmilzt und sich mit der Deckschicht dauerhaft verbindet, wobei es technisch einfach möglich ist, die Bereiche entsprechend den Anforderungen an die Ausreißfestigkeit zu bemessen. Ein weiterer Vorteil liegt vor allem darin, daß es damit auch möglich ist, die Verbindungsvorrichtung bzw. ein Trägerband ohne Verwendung der Deckschicht direkt mit dem Stützkörper aus Schaumkunststoff dauerhaft zu verbinden, wozu im allgemeinen größer dimensionierte Verbindungsbereiche erforderlich sind.

Eine andere weitere vorteilhafte Ausführungsform der Erfindung ist im Patentanspruch 8 beschrieben. Dadurch bieten sich vorteilhaft neben einer Klettbandverbindung eine Reihe weiterer Verbindungsvorrichtungen, wie z.B. Reißverschlüsse, Haken, Ösenverbindungen etc. an.

Eine weitere Ausbildung beschreibt Patentanspruch 9. Durch diese Ausbildung ist es möglich, Bereiche des Trägerbandes für die Verschweißung mit der Deckschicht unter Anwendung von Druck und Temperatur zu verwenden.

Vorteilhaft ist aber auch eine Weiterbildung nach Patentanspruch 10, weil dadurch in den Verbindungsbereichen auch die Deckschicht und bzw. oder der Schaumkunststoff des Stützkörpers aufgeschmolzen wird und sich dadurch eine Verbindung höherer Festigkeit ergibt.

Des weiteren ist auch eine Ausführung nach Patentanspruch 11 möglich, weil dadurch die Verbindungsvorrichtung selbsthaftend auf der Deckschicht und bzw. oder auf dem Polster vorpositioniert befestigt werden kann.

So ist auch eine Ausführungsform nach Patentanspruch 12 möglich, weil dadurch der Kleber ein zusätzliches Schweißmittel bildet.

Eine andere Weiterbildung ist im Patentanspruch 13 beschrieben. Dadurch ist es sehr einfach möglich, die für eine dauerhafte Verbindung erforderlichen Verbindungsbereiche bereits bei der Herstellung eines Trägerbandes festzulegen.

Eine weitere Ausbildung beschreibt Patentanspruch 14. Durch die thermische Umformung der auf einer Verbindungsvorrichtung, insbesondere einem Klettband, angeordneten Verankerungsteile kann die dauerhafte Verbindung ohne Zugabe von zusätzlichem Schweißmaterial erfolgen.

Weiters ist auch eine Ausführungsform nach Patentanspruch 15 möglich, wodurch in überraschend einfacher Weise die Haltekraft einer Verbindungsvorrichtung durch das teilweise Abschmelzen der Verankerungsteile gegebenenfalls verringert werden kann.

Die Erfindung beschreibt ferner ein Verfahren gemäß dem Oberbegriff im Anspruch 16.

Das Verfahren ist durch die Maßnahmen im Kennzeichenteil des Patentanspruches 16 gekennzeichnet. Der überraschende Vorteil dabei ist eine technisch einfache Vorrichtung für das Aufbringen der Verbindungsvorrichtung in der Art von zumindest einer bereichsweise beheizbaren Preßmatrize. Diese von einer Energieversorgung über Zwischenschaltung einer Steuer- und Regeleinrichtung versorgten Preßmatrize kann überdies zur Aufnahme der Verbindungsvorrichtung ausgebildet sein, wodurch sich die Position der Verbindungsvorrichtung auf der Deckschicht und bzw. oder dem Polster genau festlegen läßt. Durch die der Vorrichtung vorgeordnete Steuer- und Regeleinrichtung wird die für das Verfahren erforderliche Temperatur wie auch die Zeitdauer für die Aufbringung der Druckkraft bestimmt.

Eine weitere vorteilhafte Verfahrensvariante ist im Patentanspruch 17 beschrieben. Dadurch wird z.B. das Trägerband der Verbindungsvorrichtung und die Deckschicht, mit der das Trägerband bleibend verbunden wird, in den Verbindungsbereichen durch die thermische Belastung unter Druckeinwirkung eingeprägt und durch die im Randbereich der Prägung entstehenden Seitenflächen eine insgesamt höhere Haltbarkeit der Verschweißung erreicht.

Schließlich ist noch eine weitere vorteilhafte Variante des Verfahrens im Patentanspruch 18 beschrieben, wodurch zusätzlich zu den im Verbindungsbereich aufgeschmolzenen Materialkomponenten eines Trägerbandes und einer Deckschicht der wärmeaktivierbare Kleber in die Gewebestruktur des Trägerbandes und der Deckschicht eindringt und sich nach der Abkühlung eine durchgehende Verbindung mit einer sehr hohe Ausreißfestigkeit bildet.

Zum besseren Verständnis der Erfindung wird diese nachfolgend anhand der in den Zeichnungen dargestellten Ausführungsbeispiele näher erläutert.

Es zeigen:
- Fig. 1: eine Doppelsitzbank mit zwei erfindungsgemäßen Sitzen für zwei Personen in schaubildlicher Darstellung;
- Fig. 2: einen Sitzpolster für eine Sitzfläche des Sitzes nach Fig. 1 in Seitenansicht;
- Fig. 3: den Sitzpolster für die Sitzfläche in Stirnansicht und im Schnitt gemäß den Linien III-III in Fig.2;
- Fig. 4: einen Teil des Sitzpolsters in Seitenansicht in größerem Maßstab, geschnitten gemäß den Linien IV-IV in Fig.3.
- Fig. 5: die Verbindungsbereiche in Stirnansicht und im Schnitt gemäß den Linien V-V in Fig.4;
- Fig. 6: eine Verbindungsvorrichtung mit einer Deckschicht in Draufsicht;
- Fig. 7: eine Verfahrensanordnung mit einer beheizbaren Preßmatrize in schematischer Darstellung;
- Fig. 8: eine auf einer Deckschicht aufgebrachte Verbindungsvorrichtung mit den erfindungsgemäßen Verbindungsbereichen in Draufsicht und vereinfachter schematischer Darstellung;
- Fig. 9: die Verbindungsvorrichtung nach Fig. 8 in Seitenansicht, geschnitten und mit der dieser zugeordneten Preßmatritze für die Verbindungsvorrichtungen in Seitenansicht und ebenfalls vereinfachter schematischer Darstellung;
- Fig. 10: eine andere Ausführungsvariante eines Sitzpolsters in Seitenansicht, teilweise geschnitten;
- Fig. 11: den Sitzpolster nach Fig. 10 in Draufsicht, teilweise geschnitten;
- Fig. 12: eine andere Ausführungsvariante eines Sitzpolsters in Stirnansicht geschnitten und vereinfachter schematischer Darstellung.

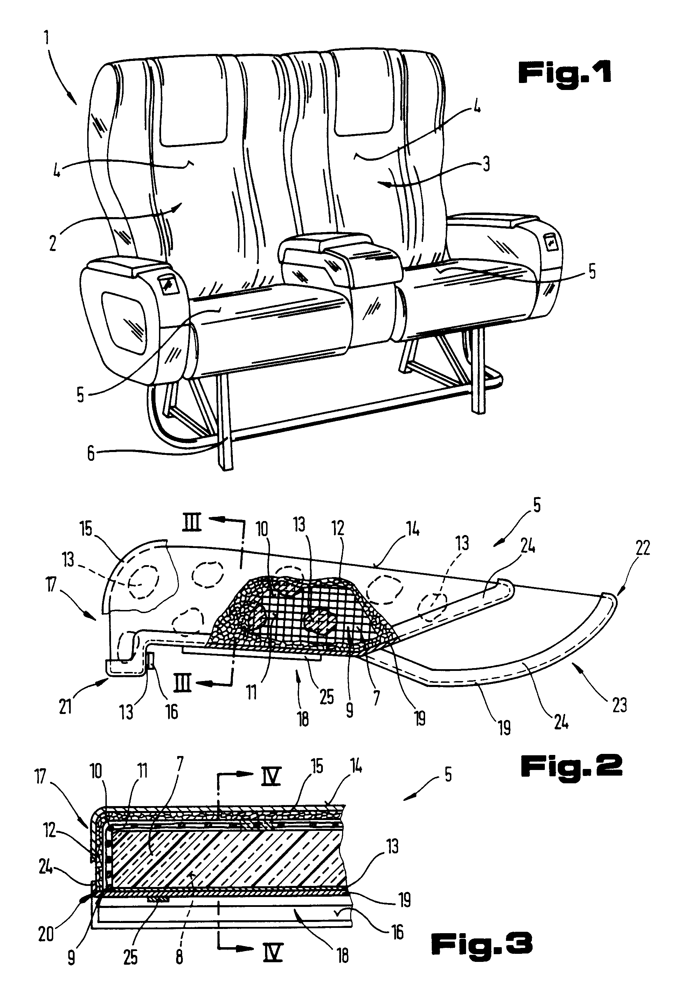

In Fig. 1 ist eine Doppelsitzbank 1 mit zwei Sitzen 2,3 dargestellt. Jeder Sitz 2,3 besteht aus einem Polster 4 für eine Rückenlehne und einem Sitzpolster 5 für eine Sitzfläche. Der Polster 4 und Sitzpolster 5 der beiden Sitze 2 und 3 sind identisch aufgebaut jedoch spiegelbildlich ausgebildet. Sie können aber auch für einen Einzelsitz oder eine Mehrfachsitzbank verwendet werden. Außerdem kann ein Sitz 2 oder 3 auch aus einem einzigen oder mehreren Polstern bestehen.

Die Polster 4 und Sitzpolster 5 werden in ein generell mit 6 bezeichnetes Traggestell eingelegt. Das Traggestell 6 kann auch jede beliebige andere Form aufweisen.

In Fig. 2 und 3 ist der Sitzpolster 5 gezeigt, der eine Sitzfläche bildet. Der Sitzpolster 5 umfaßt einen Stützkörper 7, der bevorzugt aus einem Formkaltschaum besteht und in einer den gewünschten äußeren Abmessungen des Stützkörpers 7 entsprechenden Form hergestellt wird. Er besteht aus einem elastischen, offenzelligen Kunststoffschaum. Bevorzugt ist er einteilig ausgebildet. Der Kunststoffschaum kann wie schematisch durch kleine Striche im Bereich der Schraffur angedeutet mit einem pulverförmigen Flammschutzmittel 8, z.B. durch Melaminharz und bzw. oder Aluminiumhydroxyd, versetzt sein. Auf der Oberseite des Stützkörpers 7 ist eine Zwischenschicht 9 aus gitter- bzw. netzförmig verlegten, hochtemperaturfesten Fäden 10 und 11 angeordnet. Diese Zwischenschicht 9 wird von einer Flammschutzschicht 12, die auf der vom Stützkörper 7 abgewendeten Seite der Zwischenschicht 9 vorgesehen ist, abgedeckt. Diese Flammschutzschicht 12 ist mit einem flüssigen Flammschutzmittel getränkt. Das flüssige Flammschutzmittel ist z.B. chlor-, brom- oder phosphorhaltig. Vorteilhaft ist es, wenn das flüssige Flammschutzmittel mit Aluminiumoxydhydrat vermischt ist, dessen Korngrößenverteilung vorzugsweise zwischen 0,2 und 110 »m beträgt. Diese Flammschutzschicht 12 besteht bevorzugt aus einem Polyäther, wobei der Schaumkunststoff einen Teil eines Kunststoffschaumblockes bildet, der nachträglich mit einem flüssigen Flammschutzmittel getränkt wird. Die Flammschutzschicht 12, die Zwischenschicht 9, und der Stützkörper 7 sind in über die Fläche verteilten Bereichen über einen Kleber 13 miteinander verbunden, sodaß der Luftdurchsatz des Sitzpolsters 5 durch den Kleber 13 nicht wesentlich nachteilig beeinflußt wird. Die Flammschutzschicht 12 ist auf der Sitzfläche 14 mit einem schwer entflammbaren Bezugstoff 15 abgedeckt. Die Verbindung des Bezugstoffes 15 mit dem Sitzpolster 5 erfolgt über Klettbänder 16, die im Bereich einer Vertiefung der Flammschutzschicht 12 angeordnet sein können. Die Zwischenschicht 9 und die Flammschutzschicht 12 umhüllen den Stützkörper 7 im Bereich der Sitzfläche 14, die der den Sitz benutzenden Person zugewandt ist, als auch im Bereich von Seitenflächen 17. Der schwer entflammbare Bezugstoff 15 kann ebenfalls diese Flächen des Sitzpolsters 5 oder auch den gesamten überdecken, aber es ist, bedingt durch den erfindungsgemäßen Aufbau des Sitzpolsters 5 nunmehr auch möglich, in jenen Bereichen, die nicht einzusehen sind - wie beispielsweise unterhalb der Sitzbank - den schwer entflammbaren Bezugstoff wegzulassen.

Die Zwischenschicht 9, die beispielsweise auch durch ein Gewirke oder Gewebe oder Vlies, Netz oder Gitter gebildet sein kann, weist bevorzugt eine Maschenweite der gitter- bzw. netzförmig verlegten Fäden von ca. 0,5 bis 8 mm bevorzugt 3 mm auf.

Wie die Darstellungen in Fig. 2 und 3 weiters zeigen, ist auf einer Unterseite 18 des Sitzpolsters 5 eine Deckschicht 19 angeordnet. Diese Deckschicht besteht aus einem flammfesten Gewebe bzw. Gewirke oder einem Vlies aus nichtbrennbaren bzw. schwerbrennbaren Fasern. Solche schwer entflammbaren Stoffe bestehen meist aus einer Verbindung zwischen Baumwolle und Polyester, z.B. 81 % Baumwolle und 19 % Polyester oder auch aus 59 % Wolle, 33 % Baumwolle und 8 % Polyester.

Die Deckschicht 19 ist mittels eines Klebers 13, beispielsweise einer durchgehenden Schicht oder, wie in Fig.2 für die Zwischenschicht 9 bzw. die Flammschutzschicht 12 gezeigt, über einzelne Klebepunkte mit dem Stützkörper 7 verbunden. Es ist selbstverständlich aber auch möglich, daß der Stützkörper 7 direkt auf diese Deckschicht 19 aufgeschäumt ist. Hierzu wäre die Deckschicht 19 vor der Herstellung des Stützkörpers 7 in eine entsprechende Schäumform einzulegen.

Als vorteilhaft hat es sich weiters erwiesen, wenn diese Deckschicht 19 Kanten 20 bis 23 zwischen den Seitenflächen 17 bzw. der Unterseite 18 übergreift bzw. überdeckt. Durch diese über die Seitenflächen 17 bzw. die Sitzfläche 14 vorragenden Teile 24 der Deckschicht 19 können die Schichten des Klebers 13 zwischen dem Stützkörper 7 bzw. der Deckschicht 19 und der Flammschutzschicht 12 bzw. dem Stützkörper 7 und gegebenenfalls der Zwischenschicht 9 abgedeckt werden. Dies verhindert bei einer Flammeneinwirkung, daß die Flammen durch das Entzünden des Klebers in das Innere des Sitzpolsters 5 eindringen können. Andererseits wird durch diese überlappende bzw. übergreifende Anordnung der Teile 24 der Deckschicht 19 ein Ablösen der Flammschutzschicht 12 bzw. der Zwischenschicht 9 vom Stützkörper 7 zuverlässig verhindert. Damit wird die Belastbarkeit des Sitzpolsters 5 vor allem beim Wechseln der flammfesten Bezugstoffe 15 erheblich erhöht und auch die Sicherheit der Passagiere im Falle eines Brandes im Beförderungsmittel, da auch bei länger im Einsatz befindlichen Sitzpolstern 5 die von den verschiedenen Prüfbehörden vorgeschriebenen Standzeiten der Sitzpolster eingehalten werden können.

Wie weiters ersichtlich ist, sind auf der vom Stützkörper 7 abgewendeten Seite der Deckschicht 19 die Klettbänder 16 einer Haltevorrichtung für den flammfesten Bezugstoff 15 angeordnet. Diese können bevorzugt über eine Schicht aus Kleber 13 mit der Deckschicht 19 verbunden sein. Der Vorteil dieser Lösung liegt darin, daß durch die über eine große Fläche mit dem Stützkörper 7 verbundene Deckschicht 19 eine hohe Festigkeit gegen Ablösungen der Deckschicht 19 durch die im Bereich des Klettbandes 16 beim Ablösen des flammfesten Bezugstoffes 15 auftretenden, teilweise punktuell auf kleine Bereiche begrenzten Zugkräfte vermieden wird.

Des weiteren ist es zum Schutz dieser Deckschicht 19 auch möglich, ebenfalls auf der vom Stützkörper 7 abgewendeten Seite Verstärkungsauflagen 25 vorzusehen, durch die verhindert werden kann, daß im Auflagebereich des Sitzpolsters 5 auf dem Traggestell 6 die Deckschicht 19 aufgescheuert bzw. zerstört oder aufgerissen wird.

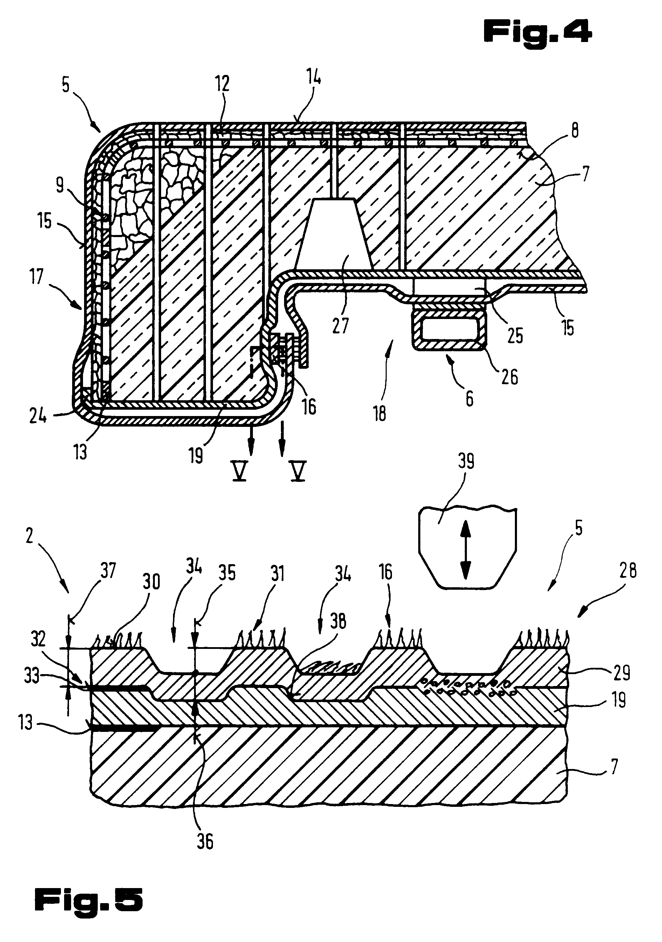

In Fig.4 ist im vergrößerten Maßstab der Sitzpolster 5 in seinem vorderen Eckbereich nochmals gezeigt. Aus dieser Darstellung ist auch besser ersichtlich, daß der Bezugstoff 15 über die die Seitenfläche 17 überdeckenden Teile 24 der Deckschicht 19 hinweggeführt ist. Weiters ist auch gezeigt, daß zusätzlich zu der Deckschicht 19 auf der Unterseite 18 des Sitzpolsters 5 auch ein flammfester Bezugstoff 15 angeordnet sein kann. Wie bereits anhand der Fig. 3 beschrieben, kann es zweckmäßig sein, auf der Deckschicht 19 Verstärkungsauflagen 25 anzuordnen, über die die Deckschicht 19 auf einem Tragholm 26 des Traggestelles 6 abgestützt sein kann.

Des weiteren ist aus dieser Darstellung sehr gut ersichtlich, daß durch die die Seitenfläche 17 überragenden Teile 24 der Deckschicht 19 die Stirnseite der zwischen dem Stützkörper 7 und der Flammschutzschicht 12 angeordneten Schicht des Klebers geschützt werden kann.

Auch in dieser Ausführungsform ist das Flammschutzmittel 8 im Stützkörper 7 durch strichlierte Linien angedeutet.

Weiters ist in diesem Ausführungsbeispiel gezeigt, daß der Stützkörper 7 mit Ausnehmungen 27, beispielsweise Kavernen, versehen sein kann.

Des weiteren ist es auch möglich, beispielsweise nach Fertigstellung des Sitzpolsters 5 diesen mit Nadeln zu durchstechen, sodaß die im vorliegenden Ausführungsbeispiel in ihrem Durchmesser unverhältnismäßig groß dargestellten, durchgehenden Öffnungen gebildet werden können, die der Wärme- und Feuchtigkeitsabfuhr aus dem Bereich der Sitzfläche 14 dienen.

In Fig. 5 ist eine Verbindungsvorrichtung 28 mit dem Klettband 16 gezeigt. Der Stützkörper 7 aus Schaumkunststoff ist mit der Deckschicht 19 mit dem Kleber 13 verbunden. Das Klettband 16 weist ein Trägerband 29 aus einem thermisch verformbaren Material, z.B. Polyamid, auf. An einer der Deckschicht 19 abgewandten Oberfläche 30 sind auf dem Trägerband 29 Verankerungsteile 31, z.B. ein widerhakenförmig ausgebildeter Flor aus Kunststoff oder Nylonfasern, angeordnet. An einer Verbindungsfläche 32 ist am Trägerband 29 der Deckschicht 19 zugewandt ein z.B. wärmeaktivierbarer Kleber 33 angeordnet. In Verbindungsbereichen 34 ist das Trägerband 29 in Richtung der Deckschicht 19 thermisch verformt, wobei eine Tiefe 35 und eine Dicke 36 des Trägerbandes 29 im Verbindungsbereich größer ist als eine Dicke 37 des Trägerbandes 29 im ungeprägten Zustand, wodurch das Trägerband 29 und die Deckschicht 19 in den Verbindungsbereichen 34 in der Art einer Verzahnung ineinandergreifen und Seitenflächen 38 ausbilden.

Bei entsprechender Abstimmung der Temperatur für den Umformvorgang, entsprechend den verwendeten Materialien für das Trägerband 29, dem wärmeaktivierbaren Kleber 33 und der Deckschicht 19 werden diese in den Verbindungsbereichen 34 in eine zähflüssige Schmelze verwandelt bzw. plastifiziert, wodurch sich ein Ineinanderfließen der Materialien mit einer hohen Festigkeit der Verbindung nach dem Erstarren einstellt. Darüber hinaus kann der wärmeaktivierbare Kleber 33 mit einer Klebewirkung bei Raumtemperatur im Bereich der höheren Umformtemperatur eine Dünnflüssigkeit aufweisen, wodurch ein Eindringen sowohl in das Trägerband 29 als auch in die Deckschicht 19 erfolgt.

Wie weiters der Fig.5 zu entnehmen ist, können die Verankerungsteile 31 in den Verbindungsbereichen 34 durch die Temperatureinwirkung eines beheizbaren Stempels 39 thermisch umgeformt oder aber abgeschmolzen werden. Im letztgenannten Fall dringt die Schmelze in das gewebeförmige Grundmaterial der Deckschicht 19 ein und bewirkt nach der Erstarrung eine feste Schweißverbindung. Bei thermischer Umformung kann durch die Größe der Gesamtfläche die Haftkraft des Klettbandes verändert werden.

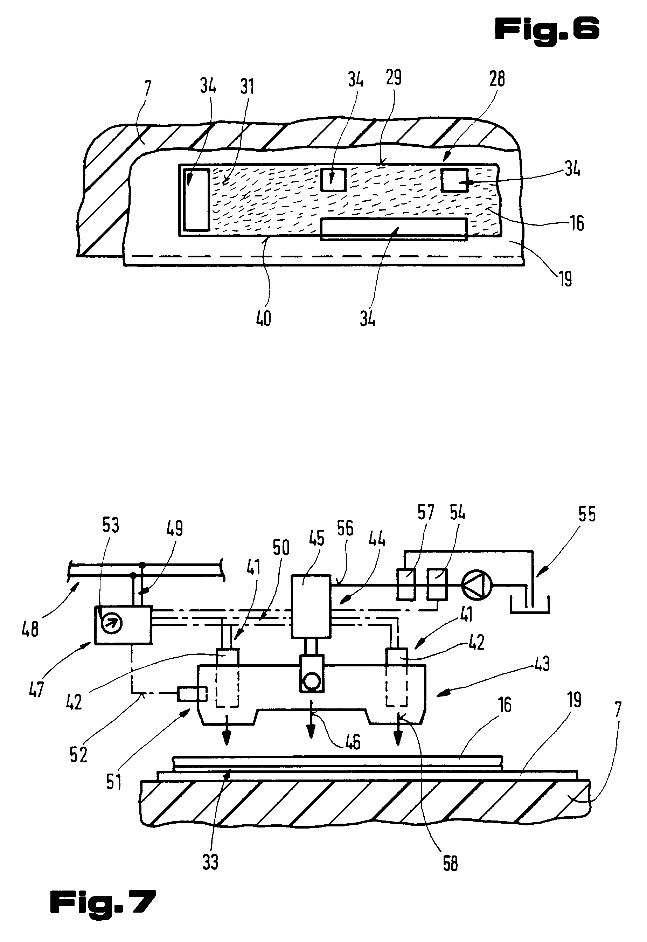

In Fig. 6 ist die Verbindungsvorrichtung 28 mit einem Klettband 16 auf dem mit der Deckschicht 19 versehenen Stützkörper 7 gezeigt. Das Klettband 16 besteht aus dem Trägerband 29, z.B. aus thermisch verformbarem Kunststoff, und den darauf angeordneten Verankerungsteilen 31. In den Verbindungsbereichen 34 sind die Verankerungsteile 31 nach der Beaufschlagung der Verbindungsbereiche 34 mit Druck und Temperatur abgeschmolzen und als Schmelze in das Grundmaterial des Trägerbandes 29 und der Deckschicht 19 eingeschmolzen.

Die Verbindungsbereiche 34 können in beliebiger Rasterform angeordnet werden. So ist es z.B. möglich, die Verbindungsbereiche 34 innerhalb des durch das Klettband 16 gebildeten Umrisses, aber auch eine Seitenkante 40 des Klettbandes 16 überdeckend anzuordnen. Die Haltbarkeit und damit die Ausreißfestigkeit der Verbindungsvorrichtung 28 kann somit durch die Anzahl, die Anordnung und die Größe der Verbindungsbereiche 34 festgelegt werden. Es ist damit aber auch möglich, die Anzahl der Verankerungsteile 31, welche die Haftkraft zweier zusammenwirkender Klettbänder bestimmen, durch das bereichsweise Abschmelzen bzw. Umformen zu beeinflussen, um gegebenenfalls die Haltekraft zu reduzieren und damit ein leichteres Lösen des Bezugstoffes 15 zu ermöglichen.

In Fig.7 ist in schematischer Darstellung das Verfahren zur Verbindung des Klettbandes 16 mit einer den Stützkörper 7 bedeckenden Deckschicht 19 gezeigt. Eine mit einer Heizanordnung 41, z.B. Heizpatronen 42, versehene Preßmatrize 43 ist über eine Vorschubvorrichtung 44, z.B. einem druckbeaufschlagten Zylinder 45, in Richtung des auf der Deckschicht 19 vorpositionierten Klettbandes 16 - Pfeil 46 - verfahrbar. Das Klettband 16 kann dabei durch den Kleber 33, z.B. einem wärmeaktivierbaren Kleber auf der Deckschicht 19 vorpositioniert gehaltert sein. Über eine den Heizpatronen 42 vorgeordneten Steuer- und Regeleinrichtung 47 wird die Heizanordnung 41 von einer Energieversorgung 48 über Leitungen 49 und 50 mit elektrischer Energie versorgt. In der Preßmatrize 43 ist ein Temperaturfühler 51 angeordnet und über die Leitung 52 mit der Steuer- und Regeleinrichtung 47 in Verbindung. Dadurch kann die Energiezufuhr zur Erreichung einer konstanten, für das Verfahren erforderlichen Temperatur der Preßmatrize 43 geregelt werden.

Über ein weiteres Regelglied, z.B. eine Zeituhr 53, und über ein Ventil 54 kann ein Druckversorgungssystem 55 für den Zylinder 45 angesteuert werden und damit eine Haltezeit der Preßmatrize 43 für das Schmelzverbinden des Klettbandes 16 mit der Deckschicht 19 erreicht werden. Über ein in der Druckleitung 56 zum Zylinder 45 angeordnetes Überdruckventil 57 kann auch die für das Verfahren geeignete Preßkraft - Pfeil 58 - geregelt werden, wodurch alle das Verfahren beeinflussenden Parameter entsprechend den zu verbindenden Materialien vorgewählt werden können.

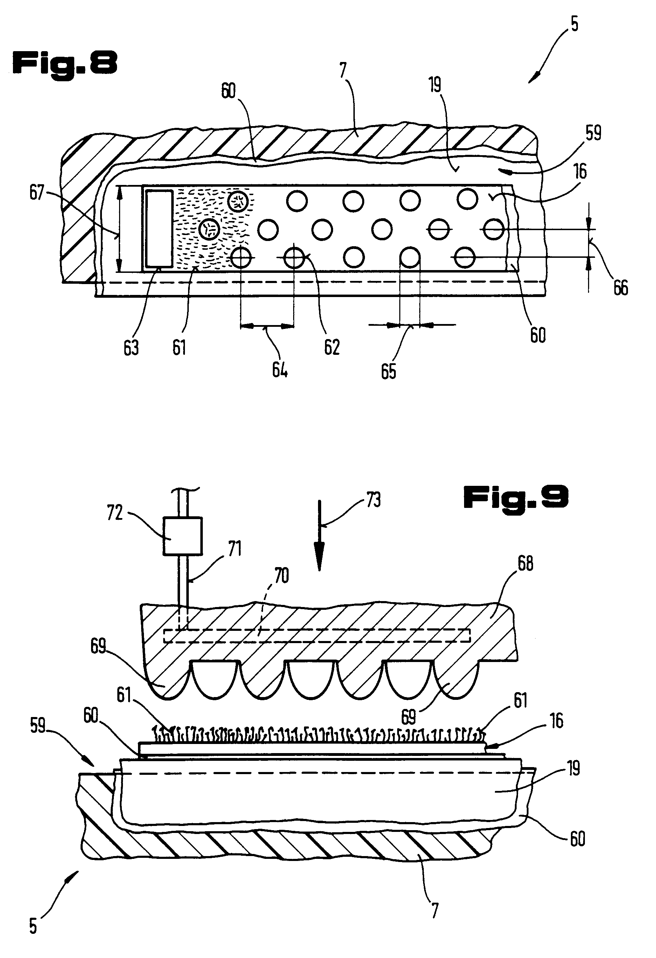

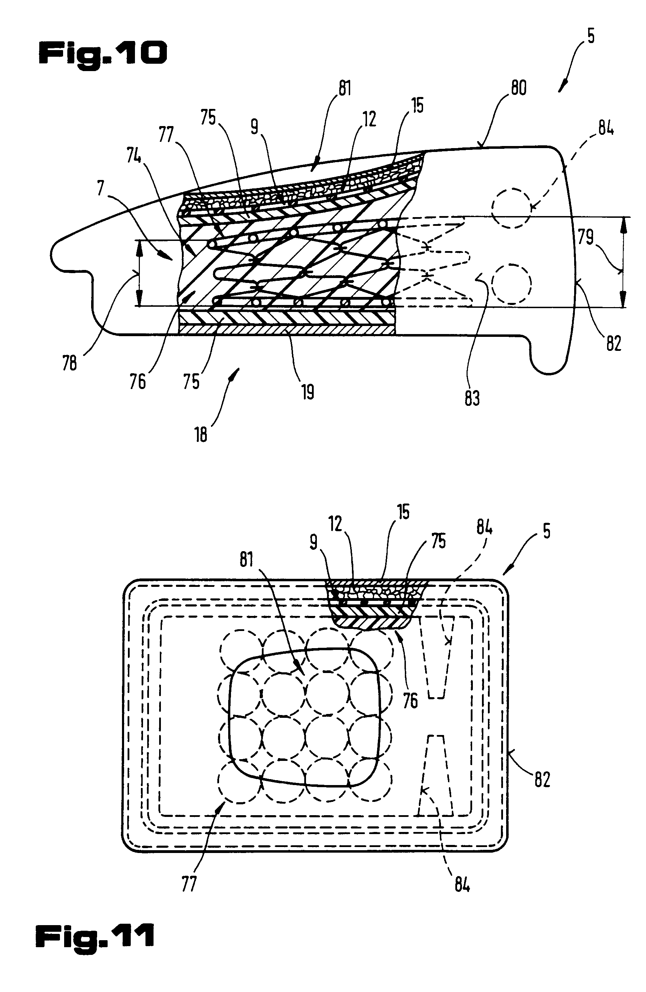

In Fig.8 und 9 ist von einem Sitzpolster 5 eine Unterseite 59 gezeigt. Diese Unterseite 59 wird durch eine Deckschicht 19, beispielsweise aus einem flammhemmenden Material, einem Netz, Gewirke oder Vlies aus Natur- bzw. Kunstfasern gebildet und ist auf einem Stützkörper 7, beispielsweise unter Zwischenschaltung einer Kleberschicht 60, befestigt. Auf dieser Deckschicht 19 ist eine Verbindungsvorrichtung zur Verbindung derselben mit dem in Fig.2 gezeigten Bezugstoff 15 angeordnet, die durch ein Klettband 16 gebildet ist. Dieses Klettband 16 ist an seiner Oberseite mit Klettfäden 61 versehen, die beim Draufdrücken eines Gegenteils sich mit diesem verhaken und damit eine sichere Befestigung bzw. Verbindung zwischen zwei Teilen zulassen. Um nun eine hohe Sicherheit gegen ein unbeabsichtigtes Ausreißen bzw. Ablösen der Verbindungsvorrichtung bzw. des Klettbandes 16 von der Deckschicht 19 zu verhindern, ist das Klettband 16 in Verbindungsbereichen 62,63 mit der Deckschicht 19 verbunden. Dazu wird das Klettband 16 über eine Kleberschicht 60 auf der Deckschicht 19 positioniert. Das Positionieren kann beispielsweise aber auch über Klammern oder sonstige Hilfsmittel erfolgen. Danach werden in den Verbindungsbereichen 62,63 in welchen das Klettband 16 mit thermisch verformbaren Materialien versehen ist bzw. zur Gänze aus solchen thermisch verformbaren Materialien besteht, erhitzt, wobei die Klettfäden, wie dies schematisch in der Zeichnung durch eine unterschiedliche Darstellung gezeigt ist, verformt werden, wodurch gegebenenfalls ihre Hafteigenschaft verringert werden kann. Die Verbindungsbereiche 62 und 63 können nun unterschiedlich ausgeführt sein, es ist aber auch ebenso möglich, mit gleichartigen bzw. angeordneten Verbindungsbereichen das Auslangen zu finden.

Im vorliegenden Ausführungsbeispiel sind die Verbindungsbereiche in einem Abstand 64 angeordnet, der ein Mehrfaches eines Durchmessers 65 der Verbindungsbereiche 62 beträgt. Die Reihen der Verbindungsbereiche 62 sind gegeneinander jeweils um die halbe Teilung versetzt und sind in einem Querabstand 66 angeordnet, der geringfügig größer sein kann, als der Durchmesser 65 der Verbindungsbereiche 62.

Damit wird ein Raster von Befestigungs- bzw. Verbindungsstellen zwischen dem Klettband 16 und der Deckschicht 19 geschaffen, wobei durch die in den Verbindungsbereichen 62 auf das Klettband aufgebrachte Wärmeenergie die über dem Plastifizierungs- bzw. wenn nötig sogar über dem Schmelzpunkt der Materialien im Verbindungsbereich liegt, ein Fließen bzw. Verformen des Klettbandes 16 stattfindet, wodurch dieses Material in die darunter liegende Deckschicht 16 eingepreßt wird bzw. einfließt und somit eine gute Verankerung des Klettbandes in der Deckschicht 19 bewirkt.

Durch die Gesamtfläche der Verbindungsbereiche 62 im Verhältnis zur Gesamtfläche des Klettbandes 16 kann auch die Haftkraft der Verbindungsvorrichtung verändert werden, insbesondere dann, wenn der Flächenanteil der Verbindungsbereiche 62 bzw. 63 einen großen Anteil der Gesamtfläche des Klettbandes 16 ausmacht. Dadurch ist die Gefahr, daß das Klettband 16 beim Ablösen des Bezugstoffes 15 von der Deckschicht 19 abgerissen bzw. losgerissen werden kann, verringert.

Als vorteilhaft hat es sich hierbei erwiesen, den Verbindungsbereich 63 im stirnseitigen Endbereich des Klettbandes 16 über die gesamte Breite 67 des Klettbandes anzuordnen, sodaß auch im hochbelasteten Endbereich eine Ablösung des Klettbandes 16 von der Deckschicht 19 zuverlässig verhindert ist.

Selbstverständlich ist es möglich, die Rasterteilung der Verbindungsbereiche 62 beliebig zu verändern und bei geringen Beanspruchungen weniger Verbindungsbereiche pro Flächeneinheit des Klettbandes 16 vorzusehen und es ist andererseits auch möglich, jede beliebige Flächenform für die Verbindungsbereiche anstelle der kreisrunden Ausführungsvariante einzusetzen.

In Fig.9 ist der Sitzpolster 5 in Stirnansicht gezeigt, wobei wiederum der Stützkörper 7 die Kleberschicht 60, die Deckschicht 19 und das Klettband 16 sowie die das Klettband 16 mit der Deckschicht 19 verbindende Kleberschicht 60 zu ersehen ist. Des weiteren ist ersichtlich, daß die Klettfäden 61 des Klettbandes 16 noch unverformt sind. Oberhalb des Klettbandes 16 ist ein Preßstempel 68 dargestellt, der mit Vorsprüngen 69 bzw. Preßnasen versehen ist. Diese Vorsprünge 69 weisen im wesentlichen einen den Verbindungsbereichen 62 und 63 entsprechenden Querschnitt auf, sind jedoch an ihrer Unterseite in Art einer Kugelkalotte bzw. mit einem ellipsenförmigen Querschnitt ausgebildet. Der gesamte Preßstempel 68 ist mittels Heizstäbe 70, von welchen einer gezeigt ist, beheizt, die über Leitungen 71 mit einer Steuervorrichtung 72 zum Regeln und Überwachen der Temperatur verbunden sind. Die Steuervorrichtung 72 ist mit einer Energiequelle, beispielsweise einem Stromversorgungsnetz eines Elektro-versorungsunternehmens, verbunden.

Der Preßstempel 68 wird nun mit den Heizstäben 70 auf eine Temperatur zwischen 60°C und 200°C, bevorzugt 100°C aufgeheizt. Diese Temperatur bewirkt, daß der Kunststoff des Klettbandes, der zumindest in den Verbindungsbereichen 62 und 63 angeordnet ist, plastifiziert wird bzw. zu schmelzen beginnt und in die darunter liegende Faserstruktur der Deckschicht 19 eindringen kann. Dies wird durch die mit dem Preßstempel 68 aufgebrachte Druckkraft 73 - durch einen Pfeil symbolisch angedeutet - unterstützt, sodaß auch der plastifizierte Kunststoff in das darunter liegende Gewebe hineingedrückt wird. Gleichzeitig wird dabei aber auch der Kleber in der Kleberschicht 60 erwärmt und ändert damit sein Fließverhalten, wobei durch die ausgeübte Druckkraft und die Temperatureinwirkung eine gleichmäßige Verteilung des Klebers erreicht bzw. dieser auch tiefer in die Deckschicht 19 hineingepreßt wird, sodaß ein inniges Verkrallen und Verbinden zwischen dem Kleber und der Deckschicht 19 bzw. dem Klettband 16 erfolgt.

Sollte es aus Taktzeitgründen nicht möglich sein, daß Verfließen des Klebers der Kleberschicht 60 abzuwarten, so ist es auch möglich, daß nach der Verbindung des Klettbandes 16 mit der Deckschicht 19 in den Verbindungsbereichen 62 und 63 der Sitzpolster 5 mit dem aufgebrachten Klettband 16 durch einen Wärmetunnel hindurchbewegt wird, in dem über eine entsprechende längere Zeitdauer eine Temperatur zwischen 100°C und 200°C einwirken kann, sodaß der Kleber der Kleberschicht 60 vollständig erweicht.

Nach dem Austreten aus dem Heiztunnel ist es dann auch möglich, kurzfristig eine Druckbelastung auf den Sitzpolster 5 aufzubringen, sodaß sich die Kleberschicht gleichmäßig in das Gewebe verteilen kann und eine verstärkte Haftung zwischen dem Klettband 16 und der Deckschicht 19 erreicht wird.

Eine besonders innige Verbindung zwischen dem Klettband 16 und der Deckschicht 19 wird dann erzielt, wenn die Deckschicht 19 eine möglichst glatte Oberfläche in Fließform oder als Gewirke aufweist.

In Fig. 10 ist eine andere Ausführungsvariante eines Sitzpolsters 5 gezeigt.

Der Stützkörper 7 des Sitzpolsters 5 besteht aus einem Zentralteil 74, eine diesen Zentralteil umgebende Hüllschicht 75 und im Bereich der Oberseite und der Seitenflächen des Sitzpolsters 5 aus einer Zwischenschicht 9, einer Flammschutzschicht 12 und dem Bezugstoff 15. Auf einer Unterseite 18 des Sitzpolsters 5 ist direkt auf den Stützkörper 7 die Deckschicht 19 angeordnet.

Dem Zentralteil 74 des Sitzpolsters 5 besteht aus einem Schaumkern 76 mit einem relativ hohen Raumgewicht zwischen 60 kg und 150 kg pro m³. Bevorzugt beträgt das Raumgewicht 90 kg pro m³. In diesen Schaumkern 78 ist ein Federkern 77 eingeschäumt. Dieser Federkern 77 weist in einer dem Polster 4, insbesondere dem Rückenpolster zugewandte Höhe 78 auf, die geringer ist, als eine Höhe 79 die den Knien des Benutzers näher liegt. diese unterschiedlichen Höhen 78 und 79 des Federkerns 77 können durch eine entsprechende Herstellung des Federkerns 77 oder durch eine Verformung des federkerns 77 während der Herstellung des Schaumkerns 76 erzielt werden.

dieser durch das hohe Raumgewicht relativ harte Schaumkern 76 ist von der Hüllschicht 75 umgeben, die eine Dicke zwischen 1 cm bis 5 cm, bevorzugt 3 cm aufweisen kann. Das Raumgewicht dieser Hüllschicht 75 ist erheblich geringer, als das des Schaumkerns 76 und beträgt beispielsweise 40 kg bis 45 kg pro m³. Damit wird für den Benutzer eines derartigen Polsters 4 ein angenehmes Sitzklima geschaffen, da im ersten Moment ein weiches nachgeben des Sitzpolsters 5 ermöglicht ist. Mit zunehmender Sitztiefe wird der Widerstand fester, sodaß ein gutes Sitzgefühl besteht.

Diese Steigerung des Sitzwiderstandes wird zusätzlich durch die Anordnung der aus Kunststoffschaum bestehenden und ebenfalls relativ weichen Flammschutzschicht 12 unterstützt. andererseits wird aber ein Zusammenfallen der Schaumschichten durch die relativ schwere und damit widerstandsfähige Kernschicht verhindert.

Um weiters ein Vorrutschen des Benutzers und eine verschobene Belastung am Sitzpolster 5 zu verhindern, kann in einer Oberseite 80 des Sitzpolsters 5 eine Vertiefung 81 vorgesehen sein, die zusätzlich zu der schräg nach vorne ansteigenden Ausbildung des Sitzpolsters 5 ein Vorrutschen in Richtung einer vom Polster 4, also dem Rückenpolster, distanzierten Stirnseite 82 des Sitzpolsters 5 verhindert wird.
Des weiteren können, wie dies schematisch durch strichlierte Linien angedeutet ist, in Seitenflächen 83 Ausnehmungen 84 angeordnet sein, die sich in das Innere des Schaumkerns 76 durch die Hüllschicht 75 hindurch erstrecken, um eine entsprechende Feuchtigkeitsabfuhr bzw. einen hohen Luftaustausch bei länger dauerndem Sitzen auf dem Sitzpolster 5 zu ermöglichen.

Durch diese Ausnehmungen 84 bzw. die Hohlräume wird bei jeder Bewegung ein entsprechendes Luftvolumen ausgetauscht, mit dem auch eine entsprechende Feuchtigkeit in Form von Wasserdampf abgeführt werden kann.

Dadurch wird verhindert, daß es vor allem beim Benutzen eines derartigen Sitzpolsters 5 in Flugzeugen, beim Anfliegen in unterschiedlichen Klimazonen bzw. bei lang andauernder Benutzung zu einer Überfeuchtung des Sitzpolsters 5 und damit zu einem Zusammenfallen des Kunststoffschaums, insbesondere des Polyurethanschaums, kommen kann. Hinsichtlich der Ausbildung dieser Ausnehmungen wird auf die parallel laufende Anmeldung der gleichen Anmelderin - WO-OS 88/09731 - verwiesen.

In Fig. 11 ist eine Draufsicht auf den Sitzpolster 5 gezeigt, aus der nochmals die Ausnehmungen 84, die sich bis in den Schaumkern 76 erstrecken, ersichtlich sind. Darüber hinaus ist auch eine mögliche Form der Vertiefung 81 im Bereich des Gesässes eines Benutzers am Sitzpolster 5 gezeigt. Wie ersichtlich, läuft diese Vertiefung 81 in Richtung der Stirnseite 82 des Sitzpolsters 5 in Anpassung an die Form der Oberschenkel der Benutzer aus.

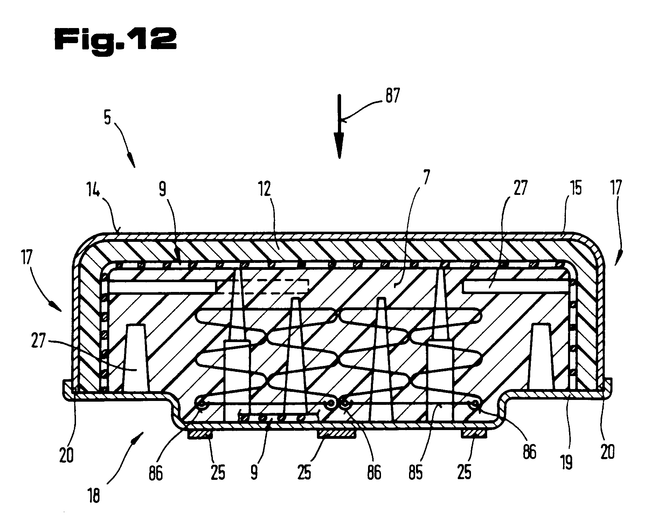

In Fig. 12 ist eine andere Ausführungsform eines Sitzpolsters 5 gezeigt, der in seinem Aufbau im wesentlichen dem in den zuvor beschriebenen Ausführungsbeispielen entspricht, weshalb auch für gleiche Teile gleiche Bezugsziffern verwendet werden. Dieser Sitzpolster 5 weist, um ein Durchsitzen des Stützkörpers 7 und ein durch diese Überbelastung erfolgendes Zusammenbrechen des Schaumkerns hintanzuhalten, einen Federkern 85 auf. Auf der Unterseite 18 des Sitzpolsters 5 ist wiederum eine Deckschicht 19 angeordnet, während die Flammschutzschicht 12 im Bereich der Sitzfläche 14 durch einen flammfesten Bezugstoff 15 abgedeckt ist, der sich auch über die Seitenflächen 17 des Sitzpolsters 5 erstreckt. Die Kanten 20 werden wieder von der Deckschicht 19 übergriffen, wodurch die schon zuvor beschriebenen Vorteile bestehen. Zwischen der Flammschutzschicht 12 und dem Stützkörper 7 ist eine Zwischenschicht 9 aus nicht brennbaren bzw. hochtemperaturbeständigen Fasern bzw. Fäden angeordnet. Wie aus der schematischen Darstellung des Federkerns 85 zu ersehen ist, weist dieser Verbindungsstellen 86 zwischen den einzelnen Teilen des Federkerns auf. Im Bereich dieser Verbindungsstellen 86 wird eine bei Belastung des Sitzes in Richtung des Pfeiles 87 relativ hohe Belastung auf die Schicht des Stützkörpers zwischen dem der Unterseite 18 zugewandten Ende des Federkerns 85 und der Deckschicht 19 ausgeübt. Um in diesem Bereich ein Durchbrechen des Stützkörpers 7 bzw. ein Durchreißen der Deckschicht 19 zu verhindern, sind Verstärkungsauflagen 25 angeordnet, die streifenförmig ausgebildet sein können.

Selbstverständlich ist es anstelle der Anordnung der Verstärkungsstreifen auf der vom Stützkörper 7 abgewendeten Seite der Deckschicht auch möglich, diese zwischen der Deckschicht 19 und dem Stützkörper 7 anzuordnen.

Des weiteren können auch bei mit den erfindungsgemaßen Flammschutzschichten versehenen Sitzpolstern 5 im Stützkörper 7 Ausnehmungen 27 angeordnet sein, um die Durchlüftung und damit die Feuchtigkeitsabfuhr vor allem dann, wenn der Sitz für längere Reisen beispielsweise Langstreckenflügen, im Einsatz ist, zu gewährleisten.

Des weiteren ist in Fig. 12 im Bereich der Unterseite 18 des Sitzpolsters 5 angedeutet, daß zwischen der Deckschicht 19 und dem Stützkörper 7 ebenfalls eine Zwischenschicht 9 in der zuvor bereits beschriebenen Art, bestehend aus hochtemperaturfesten Fasern bzw. Fäden, angeordnet sein kann.

Generell ist festzuhalten, daß für den schwer entflammbaren Bezugstoff 15 Verbindungen zwischen Baumwolle und Polyester, z.B. 81 % Baumwolle und 19 % Polyester, aber auch Bezugstoffe aus 59 % Wolle, 33 % Baumwolle und 8 % Polyester Verwendung finden können.

Der Kunststoffschaum, aus dem der Stützkörper 7 besteht, kann durch einen Formkaltschaum gebildet sein, der bevorzugt ein Raumgewicht zwischen 15 und 60 kg/m³, bevorzugt 40 kg/m³ aufweist. Dieser Stützkörper ist desweiteren mit einem pulverförmigen Flammschutzmittel 8 versetzt, welches aus Melaminharz und bzw. oder Aluminiumhydroxyd oder einer Mischung der beiden bestehen kann.

Die Zwischenschicht 9 wird bevorzugt aus Glas- bzw. Kohlefasermatten gebildet, die ein Gewicht von 150 bis 350 g/m² aufweisen können. Dadurch wird ein günstiges Verhalten zwischen dem Gewichtszuwachs bei der Verwendung dieser Zwischenschicht 9 und deren Flammschutzwirkung erreicht. Es können aber auch Zwischenschichten 9 mit einem anderen Gewicht verwendet werden.

Selbstverständlich können die hochtemperaturfesten Fäden bzw. Fasern in beliebiger Art untereinander verbunden sein. So können Gewebe und Gewirke aus diesen Fasern oder Fäden oder aus derartigen Fasern bestehenden Fäden verwendet werden, und es können andererseits die unterschiedlichsten Materialien einzeln oder vermischt miteinander zur Anwendung kommen, um den von außen einwirkenden Flammen einen möglichst hohen Widerstand über längere Zeit entgegenzusetzen. Bevorzugt werden als Grundmaterialien für die Fäden und Fasern jedoch Glas, Keramik, Graphit oder hochtemperaturfeste Metalle verwendet.

Je nach der erzielten Maschenweite bei den Gewirken, Geweben, Netzen oder Gittern der hochtemperaturfesten Fasern bzw. Fäden entsteht eine sogenannte Siebwirkung, die verhindert, daß die Flamme über dieses Sieb durch die kleinen Öffnungen nicht hinaustreten kann, und dadurch wird der direkte Abbrand im Bereich des hinter der Zwischenschicht 9 angeordneten Stützkörpers 7 verringert. Andererseits kann eine Flammentwicklung im Inneren des Stützkörpers nicht von innen her auf andere Bereiche des Bezugstoffes nach außen übergreifen, wodurch der Luftzutritt in diesen Bereichen für die Flamme im Stützkörper nicht vergrößert werden kann und damit die Ausbreitung eines Feuers im Sitz zusätzlich vermindert wird.

Die Flammschutzschicht 12 besteht bevorzugt aus einem Schaumkunststoff mit einem Raumgewicht von ca. 20 bis 60 kg/m³. Meist wird ein Polyätherschaum verwendet. Aus diesem Polyätherschaum werden Blöcke hergestellt und nach der Aufschäumung werden diese in Platten oder Bahnen mit der gewünschten Schichtstärke geschnitten. Diese Platten werden dann mit einem flüssigen Flammschutzmittel getränkt, wobei als Flammschutzmittel ein Polyurethan der Type 64 (Firma Bayer) verwendet werden kann, von welchen Gewichtsteile mit 80 Gewichsteilen Al (OH)3 vermischt werden. Dieses Aluminiumoxydhydrat wird in das Polyurethan eingerührt.

Selbstverständlich ist es im Rahmen der Erfindung möglich, über die gezeigten Ausführungsbeispiele hinaus die Anordnung der Einzelelemente beliebig zu verändern bzw. auch unterschiedlich zu kombinieren.

### Bezugszeichenaufstellung

- 1: Doppelsitzbank
- 2: Sitz
- 3: Sitz
- 4: Polster
- 5: Sitzpolster
- 6: Traggestell
- 7: Stützkörper
- 8: Flammschutzmittel
- 9: Zwischenschicht
- 10: Faden
- 11: Faden
- 12: Flammschutzschicht
- 13: Kleber
- 14: Sitzfläche
- 15: Bezugstoff
- 16: Klettband
- 17: Seitenfläche
- 18: Unterseite
- 19: Deckschicht
- 20: Kante
- 21: Kante
- 22: Kante
- 23: Kante
- 24: Teil
- 25: Verstärkungsauflage
- 26: Tragholm
- 27: Ausnehmung
- 28: Verbindungsvorrichtung
- 29: Trägerband
- 30: Oberfläche
- 31: Verankerungsteil
- 32: Verbindungsfläche
- 33: Kleber
- 34: Verbindungsbereich
- 35: Tiefe
- 36: Dicke
- 37: Dicke
- 38: Seitenfläche
- 39: Stempel
- 40: Seitenkante
- 41: Heizanordnung
- 42: Heizpatrone
- 43: Preßmatritze
- 44: Vorschubvorrichtung
- 45: Zylinder
- 46: Pfeil
- 47: Steuer-u.Regeleinrichtung
- 48: Energieversorgung
- 49: Leitung
- 50: Leitung
- 51: Temperaturfühler
- 52: Leitung
- 53: Zeituhr
- 54: Ventil
- 55: Druckversorgungssystem
- 56: Druckleitung
- 57: Überdruckventil
- 58: Pfeil
- 59: Unterseite
- 60: Kleberschicht
- 61: Klettfäden
- 62: Verbindungsbereich
- 63: Verbindungsbereich
- 64: Abstand
- 65: Durchmesser
- 66: Querabstand
- 67: Breite
- 68: Preßstempel
- 69: Vorsprung
- 70: Heizstab
- 71: Leitung
- 72: Steuervorrichtung
- 73: Druckkraft
- 74: Zentralteil
- 75: Hüllschicht
- 76: Schaumkern
- 77: Federkern
- 78: Höhe
- 79: Höhe
- 80: Oberseite
- 81: Vertiefung
- 82: Stirnseite
- 83: Seitenfläche
- 84: Ausnehmung
- 85: Federkern
- 86: Verbindungsstelle
- 87: Pfeil

## Patentansprüche

1. Sitz (2,3), insbesondere für Fahrzeuge, mit einem Polster (4,5) aus Schaumkunststoff der einen aus einem offenzelligen, elastischen Kunststoffschaum mit einem ersten Raumgewicht gebildeten Stützkörper (7) aufweist, auf dessen Oberseite eine Zwischenschicht (9) aus gitter-bzw. netzförmig verlegten hochtemperaturfesten Fäden (10, 11) angeordnet ist, die von einer mit flüssigem Flammschutzmittel getränkten Flammschutzschichte (12) aus einem offenzelligen, elastischen Schaumkunststoff mit einem zum ersten Raumgewicht unterschiedlichen zweiten Raumgewicht abgedeckt ist, wobei die Flammschutzschichte (12), die Zwischenschichte (9) und der Stützkörper (7) in über ihre Fläche verteilten Bereichen mittels eines Klebers (13) miteinander verbunden sind und die Flammschutzschichte (12) sowie die Zwischenschichte (9) sich zumindest über die Sitzfläche (14) und gegebenenfalls die Seitenflächen (17) des Polsters (4, 5) erstrecken und wobei ferner der Polster (4, 5) mit einem schwer entflammbaren Bezugstoff (15) überzogen ist, dadurch gekennzeichnet, daß auf der der Sitzfläche (14) gegenüberliegenden Unterseite (18) des Sitzpolsters auf den Stützkörper (7) eine Deckschichte (19) aus einem flammfesten Gewebe bzw. Gewirke oder Vlies aufgebracht, insbesondere aufgeklebt, ist, die zumindest im Bereich der Kanten (20 bis 23) zwischen den Seitenflächen (17) und der Unterseite (18) sowie gegebenenfalls der Sitzfläche (14) die Flammschutzschichte (12) übergreift.

2. Sitz nach Anspruch 1, dadurch gekennzeichnet, daß sich die Zwischenschichte (9) an die Unterseite (18) zwischen den Stützkörper (7) und die Deckschichte (19) erstreckt.

3. Sitz nach Anspruch 1, dadurch gekennzeichnet, daß der Stützkörper (7) auf die Deckschichte (19) aufgeschäumt ist.

4. Sitz nach einem der Ansprüche 1 bis 3, dadurch gekennzeichnet, daß einzelne Bereiche der Deckschichte (19), insbesondere auf der vom Stützkörper (7) abgewendeten Seite mit einer Verstärkungsauflage (25) versehen sind.

5. Sitz nach einem der Ansprüche 1 bis 4, dadurch gekennzeichnet, daß die Verstärkungsauflagen (25) zumindest im Bereich von Verbindungsstellen (86) zwischen einzelnen Teilen eines im Stützkörper (7) integrierten Federkerns (85) angeordnet sind.

6. Sitz nach einem der Ansprüche 1 bis 5, dadurch gekennzeichnet, daß auf der dem Stützkörper (7) abgekehrten Seite der Deckschichte (19) Klettbänder (16) zum Befestigen des Bezugstoffes (15) angeordnet sind.

7. Sitz für Fahrzeuge mit einem Polster (4,5) aus Schaumkunststoff und einer zum Teil aus Kunstfasern gebildeten Deckschicht (19) und einer mit der Deckschicht (19) verbundenen Verbindungsvorrichtung (28), dadurch gekennzeichnet, daß die Verbindungsvorrichtung (28) zumindest einzelne Bereiche aus thermisch verformbarem Material aufweist, die mit der Deckschicht (19) verschweißt bzw. heißversiegelt und bzw. oder auf diese aufgeschmolzen ist.

8. Sitz nach einem oder mehreren der Ansprüche 1 bis 7, dadurch gekennzeichnet, daß die Verbindungsvorrichtung (28) bzw. ein Trägerband (29) der Verbindungsvorrichtung (28) aus einem Netz, Gewirke, Geflecht oder Vlies mit zumindest einem Anteil aus thermisch verformbaren Materialien besteht.

9. Sitz nach einem oder mehreren der Ansprüche 1 bis 8, dadurch gekennzeichnet, daß das Trägerband (29) z.B. aus Polyamid gebildet ist.

10. Sitz nach einem oder mehreren der Ansprüche 1 bis 9, dadurch gekennzeichnet, daß der Schmelzpunkt der thermisch verformbaren Materialien zwischen 200°C bis 400°C, bevorzugt bei 300°C, liegt.

11. Sitz nach einem oder mehreren der Ansprüche 1 bis 10, dadurch gekennzeichnet, daß das Trägerband (29) der Verbindungsvorrichtung (28) zumindest bereichsweise mit der Deckschicht (19) verklebt ist.

12. Sitz nach einem oder mehreren der Ansprüche 1 bis 11, dadurch gekennzeichnet, daß ein bei Raumtemperatur Klebeeigenschaften aufweisender wärmeaktivierbarer Kleber (33) verwendet wird, der zwischen 60°C und 200°C, bevorzugt bei 100°C, dünnflüssig wird und bei Abkühlung auf Raumtemperatur aushärtet.

13. Sitz nach einem oder mehreren der Ansprüche 1 bis 12, dadurch gekennzeichnet, daß das Trägerband (29) Verbindungsbereiche (34) mit in diesen Bereichen angeordneten Klebern (33) und bzw. oder dem thermisch verformbaren Materialien aufweist.

14. Sitz nach einem oder mehreren der Ansprüche 1 bis 13, dadurch gekennzeichnet, daß Verankerungsteile (31) der Verbindungsvorrichtung (28), insbesondere des Klettbandes (16), thermisch verformt, insbesondere abgeschmolzen, werden.

15. Sitz nach einem oder mehreren der Ansprüche 1 bis 14, dadurch gekennzeichnet, daß die Verbindunbsbereiche (34) rasterförmig über die Fläche der Verbindungsvorrichtung (28), insbesondere der Verankerungsteile (31), angeordnet sind.

16. Verfahren zur Herstellung eines Sitzes (2, 3), insbesondere für Fahrzeuge mit einem Polster (4,5) aus Schaumkunststoff und einer zum Teil aus Kunstfasern gebildeten Deckschicht (19) zum Aufbringen einer Verbindungsvorrichtung (28), insbesondere eines Klettbandes, dadurch gekennzeichnet, daß das Klettband (16) in den Verbindungsbereichen (34) über den Schmelzpunkt des thermisch verformbaren Trägerbandes (29) und bzw. oder des Deckschichtmaterials erhitzt und unter Aufbringung von Druck mit der Deckschicht (19) verschmolzen bzw. verschweißt wird.

17. Verfahren nach Anspruch 16, dadurch gekennzeichnet, daß die Druckkraft unter gleichzeitiger Erwärmung so groß ist, daß in den Verbindungsbereichen (34) die Deckschicht (19) in Richtung des Stützkörpers (7) bleibend verformt wird.

18. Verfahren nach Anspruch 16 oder 17, dadurch gekennzeichnet, dass die Verbindungsvorrichtung (28), insbesondere das Trägerband (29) mit einem Kleber (33) auf die Deckschicht (19) aufgebracht und in den Verbindungsbereichen (34) erwärmt und mit der Deckschicht (19) bei Ver- flüssigung des Klebers (33) verschweisst wird, wobei der Kleber (33) in das Gewebe der Deckschicht eindringt und zur Erreichung der Haltekraft auf Raumtemperatur abgekühlt wird.

## Claims

1. Seat (2, 3), in particular for vehicles, comprising a cushion (4, 5) of foam plastics having a supporting body (7) made of open-cell resilient plastics foam having a first specific gravity, on the upper side of which an intermediate layer (9) of high-temperature resistant threads (10, 11) laid in a lattice or network is arranged, which is covered by a flame-retardant layer (12) which is pre-impregnated with a liquid flameproofing agent made of an open-cell resilient plastics foam having a second specific gravity different from the first, whereby the flame-retardant layer (12), the intermediate layer (9) and the supporting body (7) are connected to one another via regions distributed over their face by means of an adhesive (13) and wherein the flame-retardant layer (12) and also the intermediate layer (9) extend at least over the seat surface (14) and, if required the side surfaces (17) of the cushion (4, 5) and moreover, whereby the cushion (4, 5) is covered with a flame-resistant upholstery material (15), characterized in that a covering layer (19) of a flameproof fabric or respectively knitted fabric or non-woven fabric is applied, in particular glued to the supporting body (7) on the underside (18) of the seat cushion opposite the seat surface (14), which overlaps the flame-retardant layer (12) at least in the region of the edges (20 to 23) between the side surfaces (17) and the underside (18) and also, if required, the seat surface (14).

2. Seat according to claim 1, characterized in that the intermediate layer (9) extends to the underside (18) between the supporting body (7) and the covering layer (19).

3. Seat according to claim 1, characterized in that the supporting body (7) is foamed on to the covering layer (19).

4. Seat according to one of claims 1 to 3, characterized in that the individual regions of the covering layer (19), in particular on the side remote from the supporting body (7) is provided with a reinforcing support (25).

5. Seat according to one of claims 1 to 4, characterized in that the reinforcing supports (25), at least in the region of the joints (86) are arranged between individual parts of a spring core (85) incorporated in the supporting body (7).

6. Seat according to one of claims 1 to 5, characterized in that on the side of the covering layer (19) facing away from the supporting body (7) burr strips (16) are arranged to fasten the upholstery material (15).

7. Seat for vehicles having a cushion (4, 5) made of foam plastics and a covering layer (19) which is made partly of synthetic fibres and a connecting device (28) connected with the covering layer (19), characterized in that the connecting device (28) comprises at least some regions made of a thermal-working material, which is welded or sealed by heat and/or fused to the covering layer (19).

8. Seat according to one or more of claims 1 to 7, characterized in that the connecting device (28) or respectively a substrate strip (29) of the connecting device (28) consists of a net, a knitted fabric, a lattice or woven fabric having at least a portion of thermal-working materials.

9. Seat according to one or more of claims 1 to 8, characterized in that the substrate strip (29) consists of polyamide, for example.

10. Seat according to one or more of claims 1 to 9, characterized in that the melting point of the thermal-working materials is between 200°C to 400°C, preferably 300°C.

11. Seat according to one or more of claims 1 to 10, characterized in that the substrate strip (29) of the connecting device (28) is at least in some regions glued to the covering layer (19).

12. Seat according to one or more of claims 1 to 11, characterized in that a heat-activatable adhesive (33) is used, which is adhesive at room temperature, becomes fluid between 60°C and 200°C, preferably 100°C, and hardens on cooling to room temperature.

13. Seat according to one or more of claims 1 to 12, characterized in that the substrate strip (29) has joint regions (34) with adhesives (33) disposed in these regions and/or the heat-deformable materials.

14. Seat according to one or more of claims 1 to 13, characterized in that anchoring parts (31) of the connecting device (28), in particular of the burr strip (16) are thermally deformed, more particular melted away.

15. Seat according to one or more of claims 1 to 14, characterized in that the joint regions (34) are disposed in a grid over the surface of the connecting device (28), in particular of the anchoring parts (31).

16. Method of manufacturing a seat (2, 3) more particularly for vehicles comprising a foam plastics cushion (4, 5) and a covering layer (19) made partly of synthetic fibres for attaching a connecting device (28), more particularly a burr strip, characterized in that in the joint regions (34) the burr strip (16) is heated above the melting point of the heat-deformable substrate strip (29) and/or of the covering layer material and is melted or welded to the covering layer (19) under pressure.

17. Method according to claim 16, characterized in that the pressure force and simultaneous heating are sufficient for the covering layer (19) to be permanently deformed in the direction of the supporting body (7) in the joint regions (34).

18. Method according to claim 16 or 17, characterized in that the connection device (28), more particularly the substrate strip (29), is secured to the covering layer (19) by an adhesive (33) and is heated in the joint regions (34) and welded to the covering layer (19) when the adhesive (33) is liquefied, during which process the adhesive (33) penetrates into the fabric of the covering layer and is cooled to room temperature in order to achieve holding force.

## Revendications

1. Siège (2, 3), en particulier pour véhicules avec un coussin (4, 5) en matière synthétique mousse qui se compose d'un corps de support (7) en une mousse de matière synthétique élastique à cellules ouvertes d'un premier poids spécifique sur la surface duquel est agencée une couche intermédiaire (9) formée de fils (10, 11) résistants aux hautes températures posés suivant une configuration en réseau, qui est couvert par une couche ignifuge (12) en une matière synthétique mousse élastique à cellules ouvertes contenant un agent ignifuge, ayant un second poids spécifique différent du premier, à quoi la couche ignifuge (12), la couche intermédiaire (9) et le corps de support (7) sont reliés entre eux dans les régions réparties sur leurs faces par une colle (13) et à quoi la couche ignifuge (12) et également la couche intermédiaire (9) s'étendent au moins sur la surface de siège (14) et, le cas échéant, les surfaces latérales (17) du coussin (4, 5) et de plus, à quoi le coussin (4, 5) est recouvert d'une matière de revêtement (15) difficilement inflammable, caractérisé en ce qu'une couche de recouvrement (19) d'un tissu ou respectivement tissus à mailles ou un non-tissé résistante à la flamme est agencée, en particulier collée au corps de support (7) sur la surface inférieure (18) du coussin vis-à-vis de la surface de siège (14) qui recouvre la couche ignifuge (12) au moins dans la zone des bords (20 à 23) entre les surfaces latérales (17) et la surface inférieure (18) et le cas échéant, également la surface de siège (14).

2. Siège selon la revendication 1, caractérisé en ce que la couche intermédiaire (9) s'étend jusqu'à la surface inférieure (18) entre le corps de support (7) et la couche de recouvrement (19).

3. Siège selon la revendication 1, caractérisé en ce que le corps de support (7) est moussé sur la couche de recouvrement (19).

4. Siège selon l'une quelconque des revendications 1 à 3, caractérisé en ce que des zones individuelles de la couche de recouvrement (19), en particulier sur le côté qui est tourné contre le corps de support (7), est munie d'un élément de renforcement (25).

5. Siège selon l'une quelconque des revendications 1 à 4, caractérisé en ce que les éléments de renforcement (25) sont agencés au moins dans la zone de jonctions (86) entre les parties individuelles d'un noyau à ressort (85) qui est incorporé dans le corps de support (7).

6. Siège selon l'une quelconque des revendications 1 à 5, caractérisé en ce que sur le côté de la couche de recouvrement (19) qui est détourné du corps de support (7), sont agencés des bandes auto-accrochantes (16) pour la fixation de la matière de revêtement (15).

7. Siège pour véhicules avec un coussin (4, 5) en matière synthétique mousse et une couche de recouvrement (19) se composant partiellement de fibres synthétiques et un dispositif de liaison (28) relié à la couche de recouvrement (19), caractérisé en ce que le dispositif de liaison (28) comporte au moins certaines zones en matériau thermiquement déformable, qui sont soudées par fusion ou respectivement vitrifiées à chaud et/ou fondues sur la couche de recouvrement (19).

8. Siège selon une ou plusieurs des revendications 1 à 7, caractérisé en ce que le dispositif de liaison (28) ou respectivement une bande de support (29) du dispositif de liaison (28) est formé d'un réseau, d'un tissu à mailles, d'un treillis ou un non-tissé consiste en un matériau thermiquement déformable au moins pour une partie.

9. Siège selon une ou plusieurs des revendications 1 à 8, caractérisé en ce que la bande de support (29) est formée de polyamide par exemple.

10. Siège selon une ou plusieurs des revendications 1 à 9, caractérisé en ce que le point de fusion des matériaux thermiquement déformables est entre 200°C et 400°C, de préférence 300°C.

11. Siège selon une ou plusieurs des revendications 1 à 10, caractérisé en ce que la bande de support (29) du dispositif de liaison (28) est collée à la couche de recouvrement (19) au moins dans certaines zones.

12. Siège selon une ou plusieurs des revendications 1 à 11, caractérisé en ce qu'une colle (33) est utilisée qui est activée par la chaleur et colle à une température ambiante, devient liquide entre 60°C et 200°C, de préférence 100°C et plastifient si la température ambiante refroidit.

13. Siège selon une ou plusieurs des revendications 1 à 12, caractérisé en ce que la bande de support (29) a des régions de liaison (34) ayant des colles (33) diposées dans ces régions et/ou des matériaux thermiquement déformables.

14. Siège selon une ou plusieurs des revendications 1 à 13, caractérisé en ce que des parties d'ancrage (31) du dispositif de liaison (28), en particulier des bandes auto-accrochantes (16) sont deformées par la chaleur, plus particulièrement éliminées par fusion.

15. Siège selon une ou plusieurs des revendications 1 à 14, caractérisé en ce que les régions de liaison (34) sont agencées suivant une configuration en treillis à travers la surface du dispositif de liaison (28), en particulier des parties d'ancrage (31).

16. Procédé de fabrication d'un siège (2, 3), en particulier pour véhicules avec un coussin (4, 5) en matière synthétique mousse et une couche de recouvrement (19) se composant partiellement de fibres synthétiques pour la fixation d'un dispositif de liaison (28), en particulier une bande auto-accrochante, caractérisé en ce que la bande auto-accrochante (16) est chauffée dans les régions de liaison (34) au-dessus du point de fusion de la bande de support (29), qui est thermiquement déformable, et/ou du matériel de la couche de recouvrement, et fondue ou respectivement soudée par fusion sur la couche de recouvrement (19) en appliquant une pression.

17. Procédé selon la revendication 16, caractérisé en ce que la force de pression est tellement forte pendant une croissance de la température simultanée que dans les régions de liaison (34) la couche de recouvrement (19) est déformée de façon permanente dans la direction du corps de support (7).

18. Procédé selon l'une des revendications 16 ou 17, caractérisé en ce que le dispositif de liaison (28), en particulier la bande de support (29) est collée à la couche de recouvrement (19) par une colle (33) et chauffée dans les régions de liaison (34) et soudée sur la couche de recouvrement (19) en liquéfiant la colle (33) à quoi la colle (33) s'insère dans le tissu et refroidit à la température ambiante pour l'obtention de la force de maintien.
